# EUROPÄISCHE PATENTANMELDUNG

(11) **EP 1 724 528 A1**
(43) Veröffentlichungstag der Anmeldung: **22.11.2006**
(21) Anmeldenummer: 05010543.6
(22) Anmeldetag: 13.05.2005
(51) Int. Cl.: F23N 1/02, F23N 5/00, F23N 5/02, F23N 5/16, F23R 3/34, F02C 9/50, F23R 3/26

(54) **Verfahren und Vorrichtung zum Regeln der Fahrlinie einer Gasturbinenbrennkammer**

(71) Anmelder: SIEMENS AKTIENGESELLSCHAFT, 80333 München (DE)
(72) Erfinder: Bode, Siegfried, 45481 Mülheim an der Ruhr (DE); Deuker, Eberhard, Dr., 45481 Mülheim an der Ruhr (DE); Diebels, Andreas, 46242 Bottrop (DE); Hahner, Thomas, 40489 Düsseldorf (DE); Hesse, Thomas, 12589 Berlin (DE); Pernau, Stefan, 45145 Essen (DE); Prade, Bernd, Dr., 45478 Mülheim an der Ruhr (DE); Schneider, Peter-Andreas, 48145 Münster (DE); Simon, Dieter, Dr., 45473 Mülheim an der Ruhr (DE); Sturm, Berthold, 33034 Brakel (DE); Thölking, Heinrich, 49377 Vechta (DE); Warnack, Dieter, Dr., 45476 Mülheim (DE)

(57) **Zusammenfassung**

Es wird eine Regelvorrichtung zum Regeln der Fahrlinie einer Gasturbinenanlage (1) zur Verfügung gestellt mit
- wenigstens einem Sensor (21, 23, 25, 27, 35, 37) zum Erfassen einer Messgröße und zum Ausgeben eines die Messgröße repräsentierenden Messsignals,
- wenigstens einer Stelleinrichtung (31, 32) zum Beeinflussen der Luft- und/oder der Brennstoffzufuhr zu einer Brennkammer (12) der Gasturbinenanlage auf der Basis einer Stellgröße und
- einem mit dem wenigstens einen Sensor (21, 23, 25, 27, 35, 37) zum Empfang der Messgröße und der wenigstens einen Stelleinrichtung (31, 32) zum Ausgeben der Stellgröße verbundenen Regler (29), der zum Ermitteln der Stellgröße auf der Basis der empfangenen Messgröße und deren Abweichung von einer Führungsgröße ausgebildet ist,
- wobei wenigstens ein Sensor (21, 23, 25, 27, 35, 37) vorhanden ist, der dazu ausgestaltet ist, die zeitliche Änderung wenigstens eines Brenner- oder Brennkammerparameters als Messgröße zu erfassen.

## Beschreibung

Die vorliegende Erfindung betrifft ein Regelverfahren sowie eine Regelvorrichtung zum Regeln der Fahrlinie einer Gasturbinenbrennkammer.

Eine Gasturbine ist eine Strömungsmaschine, die in der Regel einen Verdichter, eine Turbine und einen Brennkammerabschnitt umfasst. Im Verdichter wird angesaugte Umgebungsluft verdichtet und die verdichtete Luft schließlich dem Brennkammerabschnitt zugeführt. Im Brennkammerabschnitt ist wenigstens eine Brennkammer mit zumeist mehreren Brennern angeordnet, denen die verdichtete Luft zugeführt wird. Neben der verdichteten Luft wird den Brennern außerdem ein Brennstoff zugeführt, der mit der Luft vermischt und verbrannt wird. Die dabei in der Brennkammer entstehenden heißen Verbrennungsabgase werden der Turbine zugeführt, wo sie entspannen und abkühlen und dabei die Turbine in Rotation versetzen. Auf diese Weise wird thermische Energie der Verbrennungsabgase in mechanische Arbeit umgewandelt, die einerseits zum Antreiben des Verdichters und andererseits zum Antreiben eines Verbrauchers, beispielsweise eines Generators zum Erzeugen von Strom eingesetzt wird.

Bei der Verbrennung in der Brennkammer ist darauf zu achten, dass eine stabile Flamme vorliegt. Instabilitäten der Flamme treten insbesondere aufgrund von resonanten Verbrennungsschwingungen im Verbrennungsabgas auf und können einerseits zu einem erhöhten Schadstoffausstoß führen und andererseits Schwingungen und Vibrationen der Brennkammer verursachen, welche die Lebensdauer der Brennkammer herabsetzen und Wartungsintervalle verkürzen.

Außerdem sind die Brenner üblicherweise außer mit einer Hauptbrennstoffzufuhr auch mit einer sog. Pilotbrennstoffzufuhr ausgestattet. Über die Pilotbrennstoffzufuhr wird ein im Vergleich zum Hauptbrennstoffmassenstrom geringer Brennstoffmassenstrom zugeführt, um die die Flamme zu stützen. Zudem kann die Flamme durch Beeinflussen des Massenstroms an zugeführtem Pilotbrennstoff bei Bedarf stabilisiert werden.

Die Stabilität der Flamme wird von einer großen Anzahl von Störgrößen beeinflusst. Beispiele für derartige Störgrößen sind die Umgebungstemperatur, die Dichte und der Heizwert des Brennstoffes, aber auch der Bauzustand der Gasturbinenanlage, insbesondere der Brennkammer und der Brenner. Der Einfluss der Störgrößen wird mittels des über den Pilotbrenner zugeführten Brennstoffmassenstroms ausgeglichen. Der Pilotgasmassenstrom darf dabei bestimmte Grenzen nicht unter- bzw. überschreiten, da die Flamme sonst in einen instabilen Bereich überführt werden würde. Um den Pilotgasmassenstrom im stabilen Bereich der Flamme zu halten, findet eine Funktion Anwendung, welche den einzusetzenden Pilotgasmassenstrom in Abhängigkeit von den Störgrößen definiert. Diese Funktion wird auch Pilotgaskurve genannt.

In die Pilotgaskurve geht eine Anzahl an Gasturbinenparametern ein. Diese Parameter variieren von Gasturbinenanlage zu Gasturbinenanlage, selbst dann, wenn diese baugleich sind. Insbesondere sind auch die Umgebungsbedingungen am Aufstellungsort der Gasturbinenanlage zu berücksichtigen. Zudem können die Gasturbinenparameter beim Betrieb einer Gasturbinenanlage mit der Zeit Veränderungen unterworfen sein. Dies führt dazu, dass ein zeitaufwendiges Neueinstellen oder Nacheinstellen der Pilotgaskurve nötig werden kann. Durch den Einstellungsprozess werden hohe Kosten und Stillstandzeiten verursacht.

Hinzukommt noch, dass der Einfluss der Störgrößen auf die Pilotgaskurve quantitativ nur unzureichend bekannt ist. Auf manche Störgrößen kann überhaupt nicht adäquat reagiert werden.

Aufgabe der vorliegenden Erfindung ist es daher, ein Regelverfahren und eine Regelvorrichtung zur Verfügung zu stellen, das bzw. die sich vorteilhaft zum Unterbinden von Flammeninstabilitäten einsetzen lässt.

Diese Aufgabe wird durch ein Regelverfahren nach Anspruch 1 bzw. eine Regelvorrichtung nach Anspruch 13 gelöst. Die abhängigen Ansprüche enthalten vorteilhafte Ausgestaltungen der Erfindung.

Im erfindungsgemäßen Regelverfahren zum Regeln der Fahrlinie einer Gasturbinenanlage wird wenigstens eine Regelgröße erfasst, die erfasste Regelgröße mit einer vorgegebenen Führungsgröße verglichen, auf der Basis des Vergleichs wenigstens eine Stellgröße ermittelt. Die ermittelte Stellgröße wird an wenigstens eine die Luft- und/oder Brennstoffzufuhr zu einer Brennkammer der Gasturbinenanlage beeinflussende Stelleinrichtung ausgegeben. Als wenigstens eine Regelgröße dient hierbei eine Regelgröße, aus welcher sich die Annäherung der Flamme an eine Stabilitätsgrenze ableiten lässt. Als derartige Regelgrößen kommen insbesondere zeitliche Änderungen wenigstens eines Brennerparameters oder eines Brennkammerparameters in Betracht. Insbesondere können als Brennkammerparameter ein Wechseldruck in der Brennkammer und/oder eine Brennkammerbeschleunigung herangezogen werden. Als Brennerparameter kann bspw. ein Wechseldruck an einem Brennerflansch Verwendung finden.

Mit dem erfindungsgemäßen Regelverfahren lässt sich die Flamme stabil halten, ohne dass der Einfluss der Störgrößen auf die Flammenstabilität quantitativ genau bekannt sein muss.

Die Erfindung beruht auf dem folgenden neuen Konzept. Statt wie im Stand der Technik auf die Störgrößen zu schauen, um die Stabilität der Flamme aufrecht zu erhalten, wird in dem erfindungsgemäßen Regelungsverfahren auf die Brummgrenzen, d.h. die Stabilitätsgrenzen selbst geschaut. Mit anderen Worten, der Pilotgasmassenstrom wird nicht in Abhängigkeit von den detektierten Störgrößen variiert sondern bei Annäherung an eine Brummgrenze geändert. Das Feststellen der Annäherung an eine Brummgrenze erfolgt dabei ohne quantitative Kenntnis der Störgrößen.

Im Stand der Technik ist die quantitative Kenntnis der Störgrößen notwendig, um die Brummgrenzen, die sich mit den Störgrößen verschieben, zu ermitteln und so eine Pilotgaskurve zur Verfügung stellen zu können, die sich für alle Störgrößen innerhalb der Brummgrenzen bewegt. Da wie bereits in der Einleitung ausgeführt der Einfluss der Störgrößen auf die Brummgrenzen selbst bei baugleichen Gasturbinenanlagen beispielsweise aufgrund unterschiedlicher Umgebungsbedingungen variiert, ist im Stand der Technik ein individuelles Einstellen jeder Gasturbinenanlage nötig.

Im erfindungsgemäßen Verfahren ist dagegen eine quantitative Kenntnis der Beziehung zwischen den Störgrößen und der Lage der Brummgrenzen nicht notwendig, da die Variation der Pilotgasmenge zum Stabilisieren der Flamme direkt davon abhängig gemacht werden kann, ob eine Annäherung an eine Brummgrenze erfolgt oder nicht und eine direkte Detektion einer Annäherung an die Brummgrenzen erfolgt. Daneben wird das Pilotgas auch weiterhin zum Stützen der Flamme herangezogen.

Zum Feststellen der Annäherung an eine Brummgrenze kann die zeitliche Änderung der bereits erwähnten Brennerparameter bzw. Brennkammerparameter herangezogen werden. Besonders geeignet ist hierbei der Wechseldruck an einem Brennerflansch, da dieser früher auf eine Annäherung an eine Brummgrenze reagiert, als der Wechseldruck in der Brennkammer und die Brennkammerbeschleunigung. Grundsätzlich sind jedoch alle der genannten Brennkammerparameter zum Feststellen einer Annäherung an die Brummgrenze geeignet.

Die genannten Brennerparameter und Brennkammerparameter stellen oszillierende Größen dar, die zum Bewerten der Annäherung an eine Flammeninstabilität einer schnellen Fouriertransformation FFT (Fast Fourier Transformation) unterzogen werden. Die schnelle Fouriertransformation stellt ein besonders geeignetes Mittel zum Analysieren zeitlich veränderlicher Gröβen dar.

Weiterhin können im Regelverfahren neben dem wenigstens einen Brennerparameter und/oder dem wenigstens einen Brennkammerparameter ein oder mehrere Verbrennungsparameter als Regelgrößen erfasst werden. Ein geeigneter Verbrennungsparameter ist beispielsweise der Schadstoffausstoß der Gasturbinenanlage, insbesondere der Stickoxidgehalt (NOₓ-Gehalt) und/oder der Kohlenmonoxidgehalt (CO-Gehalt) im Verbrennungsabgas. Ein ebenfalls geeigneter Verbrennungsparameter ist der Druckabfall über die Brennkammer.

Zudem können im erfindungsgemäßen Regelverfahren die Absolutwerte der Brennerparameter und der Brennkammerparameter zur weiteren Unterstützung erfasst werden. In erster Linie wird jedoch auf die zeitliche Änderung der Brennerparameter und der Brennkammerparameter geachtet, um eine Annäherung an die Brummgrenzen festzustellen.

Als Stellgröße kann wenigstens eine Größe ausgegeben werden, welche zu einer Änderung der Gasturbinenleistung führt, und/oder eine Größe, welche eine Änderung der korrigierten Abgastemperatur der Verbrennungsabgase führt. Insbesondere wird jedoch eine Größe als Stellgröße ausgegeben, welche eine Änderung des Pilotgasmassenstroms repräsentiert. Eine Änderung der Gasturbinenleistung oder der korrigierten Abgastemperatur erfolgt in der Regel indirekt über eine Änderung der Absolutwerte der Luft- und Hauptbrennstoffzufuhr sowie über eine Änderung des Verhältnisses von Luftzufuhr zu Hauptbrennstoffzufuhr. Als Größen, die zu einer Änderung der Gasturbinenleistung oder der korrigierten Abgastemperatur führen, sind daher insbesondere solche Größen anzusehen, welche einzustellende Absolutwerte der Luftzufuhr und/oder der Hauptbrennstoffzufuhr und/oder des Verhältnisses von Luftzufuhr zu Hauptbrennstoffzufuhr repräsentieren.

Änderungen der Gasturbinenleistung können bspw. dazu eingesetzt werden, die Gasturbinenanlage im Emissionsbereich zu halten, ohne die eigentliche Fahrlinie der Anlage zu verlassen. Die Änderung des Pilotgasmassenstroms wird hingegen eingesetzt, wenn die Fahrlinie der Gasturbinenanlage verändert werden soll, um das Erreichen der Brummgrenzen zu verhindern. Gegebenenfalls kann dies mit einer Änderung der korrigierten Abgastemperatur und/oder der Gasturbinenleistung kombiniert werden.

Die Verknüpfung zwischen der erfassten Regelgröße und der Führungsgröße einerseits mit der Stellgröße andererseits kann insbesondere auf der Basis einer Fuzzy-Logic erfolgen. Alternativ ist es jedoch auch möglich ein, neuronales Netzwerk oder ein festes Regelgesetz zu verwenden. Die Fuzzy-Logic ermöglicht es insbesondere, Abstufungen in der Reaktion in Abhängigkeit vom Grad der Annäherung an die Brummgrenzen zu realisieren.

Insgesamt ermöglicht das erfindungsgemäße Regelverfahren das Erreichen und Überschreiten der Brummgrenzen zuverlässig zu verhindern. Schnellschlüsse der Gasturbinenanlage, d.h. Schnellabschaltungen der Anlage, aufgrund des Erreichens der Brummgrenzen können so zuverlässig vermieden werden. Außerdem können die Betriebsgrenzen der Gasturbinenanlage besser ausgenutzt werden. Beispielsweise kann ein hoher Stickoxidausstoß aufgrund einer erhöhten Flammeninstabilität vermindert werden, oder es kann eine höhere korrigierte Abgastemperatur (OTC Outlet Temperature Corrected) zur Anwendung kommen, wodurch sich der Wirkungsgrad der Gasturbinenanlage verbessern lässt. Ebenso ist es möglich, eine Absenkung der korrigierten Abgastemperatur bei Unterschreiten einer bestimmten Verdichtereintrittstemperatur zu vermeiden oder wenigstens zu verringern. Unter der Verdichtereintrittstemperatur ist hierbei die Temperatur der vom Verdichter angesaugten Luft beim Eintritt in den Verdichter zu verstehen.

Eine erfindungsgemäße Regelvorrichtung zum Regeln der Fahrlinie einer Gasturbinenanlage umfasst:
- Wenigstens einen Sensor zum Erfassen einer Messgröße und zum Ausgeben eines die Messgröße repräsentierenden Messsignals.
- Wenigsten eine Stelleinrichtung zum Beeinflussen der Luftzufuhr und/oder der Brennstoffzufuhr zu einer Brennkammer der Gasturbinenanlage auf der Basis einer Stellgröße.
- Einen mit dem wenigstens einen Sensor zum Empfang der Messgröße und der wenigstens einen Stelleinrichtung zum Ausgeben der Stellgröße verbundenen Regler.

Der Regler ist zum Ermitteln der Stellgröße auf der Basis der empfangenen Messgröße und deren Abweichung von einer Führungsgröße ausgelegt. In der erfindungsgemäßen Regelvorrichtung ist wenigstens ein Sensor vorhanden, der dazu ausgestaltet ist, die zeitliche Änderung eines Brennerparameters oder eines Brennerkammerparameters zu erfassen.

Mit der erfindungsgemäßen Regelvorrichtung kann das erfindungsgemäße Verfahren durchgeführt werden, wodurch sich die Fahrlinie der Gasturbinenanlage insbesondere durch verbessertes Vermeiden von Flammeninstabilitäten optimieren lässt.

Als Sensor kann hierbei insbesondere ein Sensor zum Erfassen eines Wechseldruckes in der Brennkammer und/oder ein Sensor zum Erfassen eines Wechseldruckes an einem Brennerflansch und/oder ein Sensor zum Erfassen einer Brennkammerbeschleunigung vorhanden sein. Daneben kann wenigstens ein mit dem Regler verbundener Sensor zum Erfassen eines Verbrennungsparameters, beispielsweise eine Emissionsmessvorrichtung, mit der sich bspw. der Stickoxidgehalt oder der Kohlenmonoxidgehalt des Verbrennungsabgases ermitteln lässt, oder ein Sensor zum Erfassen eines absoluten Wertes eines Brenner- oder Brennkammerparameters vorhanden sein.

Als Stelleinrichtung kann wenigstens ein Brennstoffventil zum Beeinflussen eines in die Brennkammer eingeleiteten Brennstoffmassenstroms dienen. Vorzugsweise sind wenigstens ein Brennstoffventil für eine Hauptbrennstoffleitung und eines für die Pilotbrennstoffleitung vorhanden.

Als Stelleinrichtung kann alternativ oder vorzugsweise zusätzlich zu dem wenigstens einen Brennstoffventil der erste Leitschaufelkranz des Verdichters, also der Leitschaufelkranz, welcher der einströmenden Luft einströmseitig zugewandt ist, dienen. Dieser Leitschaufelkranz weist in der Regel bewegliche Leitschaufeln auf, mit denen der zum Einströmen von Luft zur Verfügung stehende Einströmquerschnitt des Verdichters variiert werden kann.

Wenn ein die zeitliche Änderung eines Brennerparameters oder eines Brennerkammerparameters erfassender Sensor zum Erfassen einer oszillierenden Messgröße ausgebildet ist, kann der Regelvorrichtung eine Fouriertransformationseinheit zugeordnet sein, die zum Durchführen einer schnellen Fouriertransformation ausgebildet ist, um ein geeignetes Mittel zum Analysieren der oszillierenden Messgröße zur Verfügung zu stellen.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- FIG 1: zeigt eine Gasturbinenanlage in einer teilweise geschnittenen Seitenansicht.
- FIG 2: zeigt eine erfindungsgemäße Regelvorrichtung in Form eines Blockdiagrammes.

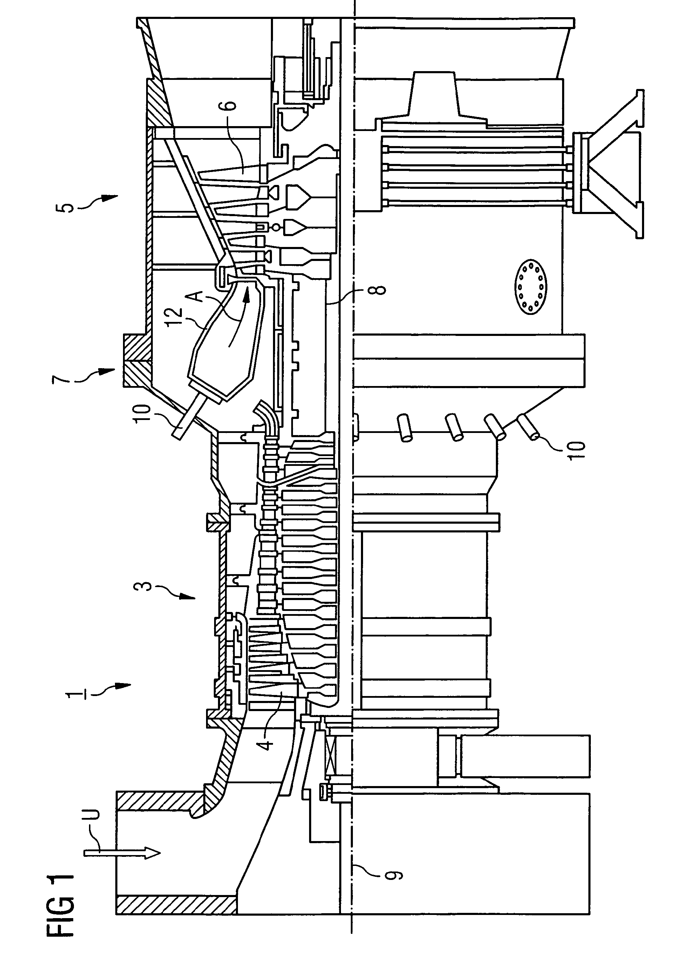

FIG 1 zeigt eine Gasturbinenanlage 1 in einer teilweise geschnittenen Seitenansicht. Diese umfasst einen Verdichterabschnitt 3, einen Turbinenabschnitt 5 und einen Brennerabschnitt 7. Im Verdichterabschnitt 3 und im Turbinenabschnitt 5 sind Verdichterlaufschaufeln 4 bzw. Turbinenlaufschaufeln 6 auf einer gemeinsamen Welle 8 angeordnet, die auch Turbinenläufer genannt wird. Der Turbinenläufer 8 ist um eine zentrale Achse 9 drehbar gelagert.

Der Brennerabschnitt 7 umfasst eine Anzahl Brenner 10, die in eine Brennkammer 12 münden, welche wiederum in den Turbinenabschnitt 5 mündet. Die Brennkammer 12 ist im vorliegenden Ausführungsbeispiel als Ringbrennkammer ausgebildet, d.h. sie erstreckt sich ringförmig um den Turbinenläufer 8 herum.

Im Betrieb der Gasturbinenanlage 1 wird über den Verdichter Umgebungsluft U eingesaugt, auf einen höheren Druck verdichtet und in den Brennerabschnitt 7 als sogenannte Verdichterluft ausgegeben. Die Größe des in den Verdichter eintretenden Luftmassenstroms kann durch Einstellen des nutzbaren Verdichtereinströmquerschnittes mittels des ersten Leitschaufelkranzes 32 beeinflusst werden.

Im Brennerabschnitt 7 tritt die Verdichterluft in den Brenner 10 ein und wird mit einem dem Brenner 10 über Brennstoffleitungen 40a, 40b zugeführten Brennstoff vermischt und in der Brennkammer 12 verbrannt. Die Größe der zugeführten Brennstoffmassenströme lässt sich hierbei über ein oder mehrere Einstellventile 31a, 31b beeinflussen.

Die bei der Verbrennung entstehenden Verbrennungsabgase bilden ein Arbeitsmedium A, welches dem Turbinenabschnitt 5 zugeleitet wird und dort unter Entspannung und Abkühlung Impuls auf die Laufschaufeln 6 überträgt und so den Rotor 8 in Rotation versetzt. Der rotierende Rotor 8 treibt einerseits den Verdichter an und ist andererseits mit einem Verbraucher (nicht dargestellt) gekoppelt, beispielsweise einem elektrischen Generator zum Erzeugen von Strom.

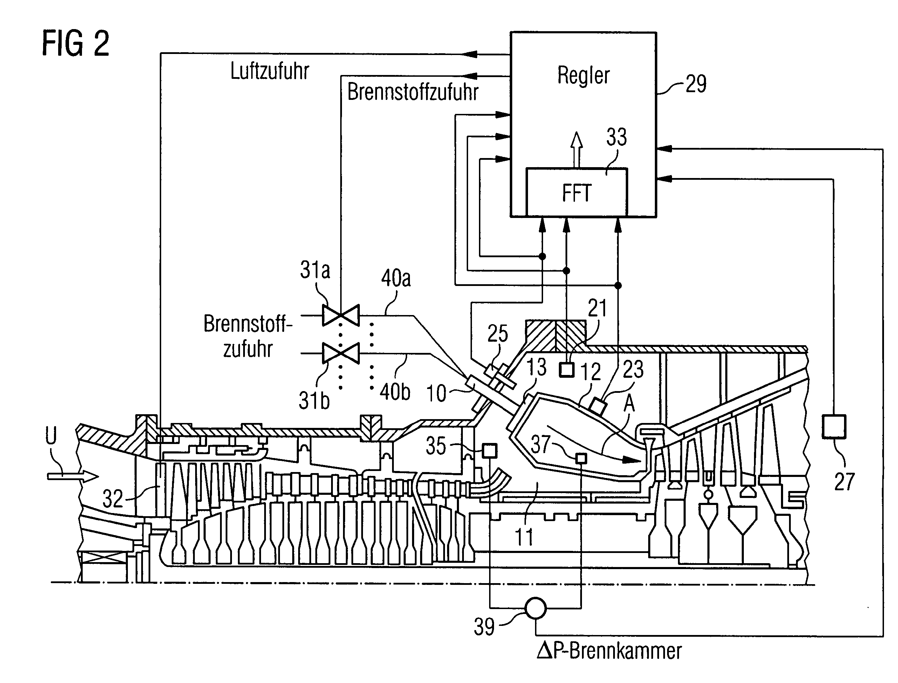

Um Instabilitäten der Flamme in der Brennkammer 12 zu vermeiden, ist die Gasturbinenanlage 1 mit einer Regelvorrichtung zum Regeln der Fahrlinie durch Beeinflussen der Brennstoff- und/oder Luftzufuhr ausgestattet. Diese Vorrichtung ist in Form eines Blockdiagrammes in FIG 2 dargestellt. Die Regelvorrichtung umfasst eine Anzahl von Sensoren 21, 23, 25, 27, 35, 37 welche an verschiedenen Stellen innerhalb und außerhalb der Gasturbinenbrennkammer 12 angeordnet sind. Die Regelvorrichtung umfasst weiter einen Regler 29, mit dem die Sensoren 21, 23, 25, 27, 35, 37 verbunden sind. Außerdem sind Stelleinrichtungen, nämlich die Einstellventile 31 und der Leitschaufelkranz 32, vorhanden, die ebenfalls mit dem Regler 29 in Verbindung stehen und die dazu ausgestaltet sind, die Massenströme der Brennstoffzufuhr sowie der Luftzufuhr zum Brenner 10 einzustellen.

In der Gasturbinenanlage 1 sind insbesondere drei einstellbare Brennstoffmassenströme und ein einstellbarer Luftmassenstrom vorhanden. Wenn beispielsweise ein gasförmiger Brennstoff zum Einsatz kommt, so ist einer der Brennstoffmassenströme ein sogenannter Diffusionsgasmassenstrom zum Betreiben des Brenners im Diffusionsmodus, in welchem das Gas direkt in die in der Brennkammer 12 befindliche Flamme eingedüst wird, ohne vorher mit Luft vermischt zu werden. Ein zweiter Brennstoffmassenstrom ist ein sogenannter Vormischgasmassenstrom zum Betreiben des Brenners in einem Vormischmodus, d.h. einem Modus, in welchem das zugeführte Gas zuvor mit der Verdichterluft vermischt wird und dieses Gemisch anschließend verbrannt wird. Schließlich ist als weiterer Brennstoffmassenstrom im vorliegenden Ausführungsbeispiel ein Pilotgasmassenstrom vorhanden, welcher u.a. dazu dient, die Flamme zu stützen, wenn der Brenner im Vormischbetrieb betrieben wird.

Mit den Sensoren 21, 23, 25, 27, 35, 37 werden verschiedene Brennkammerparameter und Verbrennungsparameter erfasst und an den Regler 29 in Form von die erfasste Messgröße repräsentierenden Signalen weitergegeben.

Der Sensor 21 ist ein im Brennkammerplenum 11 angeordneter Drucksensor zum Erfassen des Wechseldruckes in der Brennkammer 12, der Sensor 25 ein am Gasturbinengehäuse angeordneter Drucksensor zum Erfassen des Wechseldruckes am Flansch 13 der des Brenners 10 und der Sensor 23 ein Beschleunigungssensor zum Erfassen der Brennkammerbeschleunigung. Dieser ist direkt an der Außenseite der Brennkammerwand angeordnet.

Alle drei erfassten Parameter, nämlich der Wechseldruck in der Brennkammer, der Wechseldruck am Brennerflansch sowie die Brennkammerbeschleunigung sind oszillierende Größen, welche Schwingungen in den Verbrennungsabgasen widerspiegeln. Die Drucksensoren 21 und 25 sowie der Beschleunigungssensor 23 sind daher zur Ausgabe ihrer Messsignale mit einer Fouriertransformationseinheit 33 des Reglers 29 verbunden, in welcher eine Analyse der Messsignale anhand einer Fouriertransformation und insbesondere anhand einer sog. schnellen Fouriertransformation durchgeführt wird. Daneben sind sie auch direkt mit dem Regler 29, d.h. unter Umgehung der Fouriertransformationseinheit 33, verbunden, um dem Regler 29 auch die Absolutwerte der Messsignale zur Verfügung stellen zu können.

Auf der Basis des Ergebnisses der Fouriertransformation kann der Regler 29 eine Annäherung an die Brummgrenzen der Gasturbinenanlage 1, bei denen bspw. stationäre Schwingungen in den Verbrennungsgasen auftreten, feststellen. Insbesondere kann auf Basis einer Messung des Wechseldruckes am Brennerflansch 13 nach einer Analyse durch die Fouriertransformationseinheit 33 die Frequenz von Schwingungen im Verbrennungsabgas ermittelt werden. Der Wechseldruck am Brennerflansch 13 eignet sich daher als Frühindikator für eine Annäherung an die Brummgrenzen und als Regelgröße für den Regler zum Regeln der Luft- und/oder Brennstoffzufuhr derart, dass die Flammenstabilität erhalten bleibt.

Die Brennkammerbeschleunigung reagiert später als der Wechseldruck am Brennerflansch 13 auf eine Annäherung an die Brummgrenzen. Sie eignet sich daher insbesondere dazu, die Gasturbinenbrennkammer 12 vor Beschädigungen zu schützen, wenn das Regeln der Luft und/oder Brennstoffzufuhr nicht zu einer ausreichenden Stabilisierung der Flamme führt. So ist die Brennkammerbeschleunigung bspw. ein Indikator für das Auftreten von Beschädigungen an keramischen Hitzeschildelementen, mit denen die Brennkammer 12 zum Schutz ihrer tragenden Struktur vor den heißen Verbrennungsabgasen ausgekleidet ist. Hohe Brennkammerbeschleunigungen können zu Rissen und sogar zu Brüchen in Hitzeschildelementen führen, wodurch diese ihre Schutzfunktion nicht mehr ausreichend erfüllen. Zudem können sich infolge von Brüchen Bruchstücke aus dem Hitzeschild lösen und in den Turbinenabschnitt gelangen, was zu sehr gravierenden Beschädigungen der Turbine führt. Auf der Basis der Brennkammerbeschleunigung kann daher bspw. eine Notabschaltung der Gasturbinenanlage vorgenommen werden, wenn die ermittelten Brennkammerbeschleunigungen anzeigen, dass Risse oder Brüche in den Hitzeschildelementen drohen.

Außer den Wechseldrücken in der Brennkammer 12 und am Brennerflansch 13 sowie der Brennkammerbeschleunigung kann auch der Druckabfall, auch Druckgradient genannt, über die Brennkammer 12 zum Feststellen eines bevorstehenden Brummereignisses herangezogen werden. So sinkt der Druckabfall über die Brennkammer 12 unmittelbar vor dem Brummen ab, was ein drohendes zurückziehen der Flamme in den Brenner 10 und damit eine Flammeninstabilität anzeigt. Mittels einer geeigneten Sensoranordnung zum Erfassen des Druckgradienten ist daher das Detektieren eines nahen Brummereignisses möglich.

Der Druckabfall über die Brennkammer 12 erfolgt mittels einer sog. Δp-Messung. Im vorliegenden Ausführungsbeispiel wird die Δp-Messung mittels zweier Drucksensoren 35, 37 durchgeführt, von denen der eine 35 im Brennkammerplenum 11 und der andere 37 in der Brennkammer 12 angeordnet ist. Ein mit den beiden Drucksensoren 35, 37 sowie dem Regler 29 verbundener Subtrahierer 39 bildet die Differenz Δp der erfassten Drücke, und gibt diese unter Umgehung der Fouriertransformationseinheit 33 an den Regler 29 weiter.

Der Regler 29 reagiert in erster Linie auf zeitliche Änderungen der von den Sensoren 21, 23, 25 erfassten Messgrößen und weniger auf ihre absoluten Werte. Wenn der Regler 29 nun nach der Analyse der von den Sensoren 21, 23, 25 eingehenden Signale die Annäherung an eine Brummgrenze feststellt, so gibt er ein Stellsignal an die Stellventile 31a, 31b, ... und/oder an den Verdichterleitschaufelkranz 32 aus, welche eine Änderung wenigstens eines Brennstoffmassenstroms und/oder des Luftmassenstromes veranlasst. Insbesondere gibt er in diesem Fall wenigstens ein Stellsignal an das Brennstoffventil in der Zufuhrleitung des Pilotbrennstoffes aus, um über eine Änderung des Pilotbrennstoffmassenstromes die Fahrlinie der Gasturbinenanlage wieder zu optimieren, d.h. von den Brummgrenzen wegzuführen. Hierbei können die korrigierte Abgastemperatur der Gasturbinenanlage sowie deren Leistung über ein Beeinflussen des Hauptbrennstoffmassenstromes und/oder des Luftmassenstromes derart justiert werden, dass der Schadstoffausstoß auf seinem optimalen Werten gehalten bzw. wieder auf diese eingestellt wird.

Außerdem können die Stellventile 31a, 31b, ... bzw. der Leitschaufelkranz 32 auch lediglich auf die den Brennstoffmassenstrom und/oder auf den Luftmassenstrom einwirken, um über eine Beeinflussung des Pilotgasmassenstromes und/oder der Gasturbinenleistung und/oder der korrigierten Abgastemperatur bspw. den Schadstoffausstoß im vorgesehenen Bereich zu halten, wenn er bspw. aufgrund schwankender Einflussgrößen, etwa einer schwankenden Umgebungstemperatur, variiert, ohne die Fahrlinie der Gasturbinenanlage neu zu optimieren.

Auf erhöhte Schadstoffwerte kann bspw. durch Einwirken auf den Pilotgasmassenstrom reagiert werden. So kann der Pilotgasmassenstrom reduziert werden, wenn die Stickoxidwerte im Abgasstrom hoch sind oder erhöht werden, wenn die Kohlenmonoxidwerte im Abgas hoch sind. Das Erfassen der Schadstoffwerte im Abgas erfolgt im vorliegenden Ausführungsbeispiel mittels einer Emissionsmessvorrichtung 27, welche im Abgaskanal der Brennkammeranlage angeordnet ist und mit dem Regler 29 unter Umgehung der Fouriertransformationseinheit 33 in Verbindung steht.

Im vorliegenden Ausführungsbeispiel arbeitet der Regler 29 auf der Basis einer Fuzzy-Logic, um ein möglichst abgestuftes Reagieren zu ermöglichen. Er kann jedoch auch mit einem festen Regelgesetz arbeiten, das beispielsweise als funktionaler Zusammenhang des auszugebenden Stellsignals und den eingehenden Messsignalen oder in Form einer die eingehenden Messsignale mit einem ausgehenden Stellsignal verknüpfenden Tabelle vorliegt. Schließlich ist es auch möglich, einen auf einem neuronalen Netzwerk basierenden Regler einzusetzen, wodurch der Regler in die Lage versetzt wird, aus vorangegangenen Reglungsereignissen zu lernen.

## Patentansprüche

1. Regelverfahren zum Regeln der Fahrlinie einer Gasturbinenanlage (1) mit den Schritten:
- Erfassen wenigstens einer Regelgröße;
- Vergleichen einer erfassten Regelgröße mit einer vorgegebenen Führungsgröße,
- Ermitteln wenigstens einer Stellgröße auf der Basis des Vergleiches der Regelgröße mit der Führungsgröße und
- Ausgeben der ermittelten Stellgröße an wenigstens eine die Luft- und/oder die Brennstoffzufuhr zu einer Brennkammer (12) der Gasturbinenanlage (1) beeinflussende Stelleinrichtung (31, 32), wobei als die wenigstens eine Regelgröße eine Regelgröße Verwendung findet, welche die Annährung der Flamme an eine Stabilitätsgrenze anzeigt.

2. Regelverfahren nach Anspruch 1,
**dadurch gekennzeichnet, dass** als Regelgröße die zeitliche Änderung wenigstens eines Brenner- oder Brennkammerparameters erfasst wird.

3. Regelverfahren nach Anspruch 2,
**dadurch gekennzeichnet, dass** als Brennerparameter bzw. Brennkammerparameter ein Wechseldruck in der Brennkammer und/oder ein Wechseldruck an einem Brennerflansch und/oder eine Brennkammerbeschleunigung dient bzw. dienen.

4. Regelverfahren nach Anspruch 2 oder 3,
**dadurch gekennzeichnet, dass** neben dem wenigstens einen Brennerparameter bzw. Brennkammerparameter wenigstens ein Verbrennungsparameter als eine Regelgröße erfasst wird.

5. Regelverfahren nach Anspruch 4,
**dadurch gekennzeichnet, dass** als Verbrennungsparameter der NOₓ-Gehalt im Verbrennungsabgas und/oder CO-Gehalt im Verbrennungsabgas und/oder der Druckabfall über die Brennkammer dient bzw. dienen.

6. Regelverfahren nach einem der Ansprüche 2 bis 5,
**dadurch gekennzeichnet, dass** als eine weitere Regelgröße der absolute Wert wenigstens eines Brenner- oder Brennkammerparameters erfasst wird.

7. Regelverfahren nach einem der Ansprüche 2 bis 6,
**dadurch gekennzeichnet, dass** als Stellgröße wenigstens eine Größe ausgegeben wird, welche zu einer Änderung der Gasturbinenleistung führt, und/oder eine Größe ausgegeben wird, welche zu einer Änderung der korrigierten Temperatur der Verbrennungsabgase führt, und/oder eine Größe ausgegeben wird, welche zu einer Änderung eines Pilotgasmassenstromes führt.

8. Regelverfahren nach einem der Ansprüche 1 bis 7,
**dadurch gekennzeichnet, dass** der Vergleich einer erfassten Regelgröße mit einer Führungsgröße und/oder das Ermitteln der Stellgröße anhand des Vergleiches auf der Basis einer Fuzzy Logik erfolgt.

9. Regelverfahren nach einem der Ansprüche 1 bis 7,
**dadurch gekennzeichnet, dass** eine Verknüpfung der der Vergleich einer erfassten Regelgröße mit einer Führungsgröße und/oder das Ermitteln der Stellgröße anhand des Vergleiches mittels eines neuronalen Netzwerkes erfolgt.

10. Regelverfahren nach einem der Ansprüche 1 bis 7,
**dadurch gekennzeichnet, dass** der Vergleich einer erfassten Regelgröße mit einer Führungsgröße und/oder das Ermitteln der Stellgröße anhand des Vergleiches mittels eines festen Regelgesetzes erfolgt.

11. Regelverfahren nach einem der Ansprüche 1 bis 10,
**dadurch gekennzeichnet, dass** als zeitlich veränderliche Regelgrößen oszillierende Größen erfasst werden.

12. Regelverfahren nach Anspruch 10,
**dadurch gekennzeichnet, dass** eine oszillierende Größe einer schnellen Fouriertransformation unterzogen wird.

13. Regelvorrichtung zum Regeln der Fahrlinie einer Gasturbinenanlage (1) mit
- wenigstens einem Sensor (21, 23, 25, 27, 35, 37) zum Erfassen einer Messgröße und zum Ausgeben eines die Messgröße repräsentierenden Messsignals,
- wenigstens einer Stelleinrichtung (31, 32) zum Beeinflussen der Luft- und/oder der Brennstoffzufuhr zu einer Brennkammer (12) der Gasturbinenanlage auf der Basis einer Stellgröße und
- einem mit dem wenigstens einen Sensor (21, 23, 25, 27, 35, 37) zum Empfang der Messgröße und der wenigstens einen Stelleinrichtung (31, 32) zum Ausgeben der Stellgröße verbundenen Regler (29), der zum Ermitteln der Stellgröße auf der Basis der empfangenen Messgröße und deren Abweichung von einer Führungsgröße ausgebildet ist,
- wobei wenigstens ein Sensor (21, 23, 25, 27, 35, 37) vorhanden ist, der dazu ausgestaltet ist, die zeitliche Änderung wenigstens eines Brenner- oder Brennkammerparameters als Messgröße zu erfassen.

14. Regelvorrichtung nach Anspruch 13,
**dadurch gekennzeichnet, dass** als Sensor ein Sensor (21) zum Erfassen eines Wechseldruckes in der Brennkammer und/oder ein Sensor (25) zum Erfassen eines Wechseldruckes an einem Brennerflansch (13) und/oder ein Sensor (23) zum Erfassen einer Brennkammerbeschleunigung vorhanden ist bzw. sind.

15. Regelvorrichtung nach Anspruch 13 oder 14,
**gekennzeichnet durch** wenigstens eine mit dem Regler (29) verbundenen Emissionsmessvorrichtung (27).

16. Regelvorrichtung nach einem der Ansprüche 13 bis 15, **gekennzeichnet durch** wenigstens einen mit dem Regler (29) verbundenen Sensor (21, 23, 25, 27, 35, 37) zum Erfassen eines absoluten Wertes wenigstens eines Brennkammerparameters.

17. Regelvorrichtung nach einem der Ansprüche 13 bis 16,
**dadurch gekennzeichnet, dass** als Stelleinrichtung wenigstens ein Brennstoffventil (31) zum Beeinflussen eines der Verbrennung in einer Brennkammer (12) zugeführten Brennstoffmassenstromes vorhanden ist.

18. Regelvorrichtung nach einem der Ansprüche 13 bis 17,
**dadurch gekennzeichnet, dass** als Stelleinrichtung ein Verdichterleitschaufelkranz (32) vorhanden ist.

19. Regelvorrichtung nach einem der Ansprüche 12 bis 18,
**dadurch gekennzeichnet, dass** der Regler (29) ein auf Fuzzy Logik basierendes Regelungskonzept beinhaltet.

20. Regelvorrichtung nach einem der Ansprüche 12 bis 19,
**dadurch gekennzeichnet, dass** der Regler (29) ein auf einem neuronalen Netzwerk basierendes Regelungskonzept beinhaltet.

21. Regelvorrichtung nach einem der Ansprüche 12 bis 19,
**dadurch gekennzeichnet, dass** der Regler (29) ein auf einem festen Regelgesetz basierendes Regelungskonzept beinhaltet.

22. Regelvorrichtung nach einem der Ansprüche 13 bis 21,
**dadurch gekennzeichnet, dass** wenigstens ein Sensor (21, 23, 25) zum Erfassen einer oszillierende Messgrößen ausgebildet ist.

23. Regelvorrichtung nach Anspruch 22,
**dadurch gekennzeichnet, dass** eine Fouriertransformationseinheit (33) vorhanden ist, die zum Durchführen einer schnellen Fouriertransformation ausgebildet ist.
